# EUROPEAN PATENT SPECIFICATION

(11) **EP 2 745 502 B1**
(45) Date of publication and mention of the grant of the patent: **11.12.2019**
(21) Application number: 11870980.7
(22) Date of filing: 13.10.2011
(51) Int. Cl.: H04N 5/355

(54) **PIXEL, PIXEL ARRAY, IMAGE SENSOR INCLUDING THE SAME AND METHOD FOR OPERATING THE IMAGE SENSOR**
PIXEL, PIXELANORDNUNG, BILDSENSOR DAMIT UND VERFAHREN ZUM BETRIEB DES BILDSENSORS
PIXEL, ENSEMBLE DE PIXELS, CAPTEUR D'IMAGE COMPRENANT LEDIT ENSEMBLE DE PIXELS ET PROCÉDÉ DE COMMANDE DE FONCTIONNEMENT DU CAPTEUR D'IMAGES

(30) Priority: 16.08.2011 KR 20110081126
(43) Date of publication of application: 25.06.2014
(73) Proprietor: LG Innotek Co., Ltd., Seoul, 04637 (KR)
(72) Inventor: SA, Seung Hoon, Seoul 100-714 (KR); CHOI, Woon Il, Seoul 100-714 (KR)
(74) Representative: DREISS Patentanwälte PartG mbB
(86) International application number: PCT/KR2011/007608
(87) International publication number: WO 2013/024938

(56) References cited:
- WO-A1-99/34592
- JP-A- 2009 159 269
- US-A1- 2006 011 810
- US-A1- 2007 145 239
- US-A1- 2008 158 398
- US-A1- 2008 252 742
- US-A1- 2008 258 045
- US-A1- 2011 032 403
- LI BINQIAO ET AL.: 'WIDE DYNAMIC RANGE CMOS IMAGE SENSOR WITH IN-PIXEL DOUBLE-EXPOSURE AND SYNTHESIS' JOURNAL OF SEMICONDUCTORS vol. 31, no. 5, 31 May 2010, page 2,4, XP008173403

## Description

### Technical Field

The embodiment relates to a pixel, a pixel array, an image sensor including the same and a method for operating the image sensor. More particularly, the embodiment relates to a pixel, a pixel array, an image sensor including the same and a method for operating the image sensor, capable of detecting light intensity from the low intensity of illumination to the high intensity of illumination by using the 4T pixel structure.

### Background Art

A dynamic range is one of important factors to determine the quality of an image sensor. In general, the dynamic range refers to the maximum range for processing signals without distorting input signals. In the case of the image sensor, images having the superior quality can be obtained as the dynamic range becomes widened regardless of the brightness variation.

US 2008/258045 A1 discloses a solid-state imaging device. US 2006/011810 A1 discloses wide dynamic range imager. WO 99/34592 A1 discloses a wide dynamic range optical sensor. US 2008/158398 A1 discloses a CMOS Image Sensor With Increased Dynamic Range. US 2008/252742 A1 discloses a solid state imaging device.

However, according to the color image sensor of the related art, the dynamic range is so narrow that the original color of the image may not be expressed well when one of red, green and blue colors is saturated. In order to solve the problem caused by the narrow dynamic range, a WDR (wide dynamic range) pixel has been suggested.

There has been suggested one method of realizing the WDR operation by adjusting irradiation time of the light in the image sensor of the related art.

There has been suggested another method of providing an additional capacitor to change FD (floating diffusion) capacity, in which a pixel structure includes a transistor to adjust the additional capacitor so that overflow charges, which are generated from a PD (photodiode) under the high intensity of illumination as light intensity is increased, can be stored in the additional capacitor.

There has been suggested still another method of providing a WDR pixel, in which two PDs are installed in one pixel such that charges generated from the two PDs are combined with each other.

However, according to the one method, the sensitivity is constant regardless of the variation of light intensity (that is, high intensity of illumination and low intensity of illumination), so that the image may be darkened under the low intensity of illumination. In addition, while the pixel is being operated, the timing adjustment for the pixel operation under the high intensity of illumination may be limited.

In addition, the method for improving the sensitivity characteristic according to light intensity by using the additional capacitor and the transistor Tr and the method for individually driving the two PDs in one pixel may cause reduction of the fill factor in the pixel.

### Disclosure of Invention

### Technical Problem

In order to solve the above problems, according to the embodiment, charges are integrated by variously setting charge integration sections for lights having the high intensity of illumination and low intensity of illumination, in which a charge conversion unit generating charges and a charge storage unit are shared when the light has the high intensity of illumination so that the dynamic range of a pixel can be widened under the high intensity of illumination.

### Solution to the Problem

A method for operating an image sensor according to claim 1.

### Advantageous Effects of Invention

According to the embodiment, the charge integration time for the light having the high intensity of illumination can be shortened and charge storage capacitance can be instantly increased, so that the pixel can detect the light having the high intensity of illumination as well as the light having the low intensity of illumination.

### Brief Description of Drawings

FIG. 1 is a circuit view of a pixel array according to one embodiment;
FIG. 2 is a view showing a driving timing of a pixel according to one example;
FIGS. 3a and 3b are schematic views for explaining the operation of a charge in each driving timing of FIG. 2;
FIG. 4 is a view showing a driving timing of a pixel according to another example;
FIGS. 5a and 5b are schematic views for explaining the operation of a charge in each driving timing of FIG. 4;
FIG. 6 is a view showing a driving timing of a pixel according to an embodiment;
FIG. 7 is a graph showing a signal output as a function of light intensity when a pixel according to one embodiment is driven;
FIG. 8 is a circuit view of a pixel array according to another embodiment;
FIG. 9 is a circuit view of a pixel array according to still another embodiment; and
FIG. 10 is a flowchart showing a driving method for an image sensor according to one example.

### [Mode for Invention]

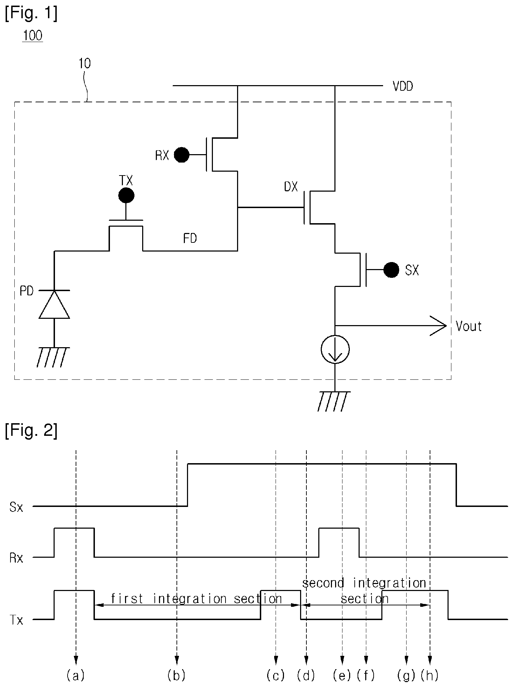

FIG. 1 is a circuit view of a pixel array 100 according to one embodiment. Although FIG. 1 illustrates the pixel array 100 including a unit pixel circuit 10 and a power supply VDD, it is illustrative purpose only. The pixel array 100 can be prepared as a circuit including a plurality of pixels. Only the unit pixel 10 is illustrated in FIG. 1.

Referring to FIG. 1, the pixel array 100 of the embodiment includes a charge conversion unit PD, which detects light and converts the light into charges to integrate the charges during first and second integration sections different from each other, a charge storage unit FD for storing the charges converted by the charge conversion unit PD, a transfer switching unit TX for transferring the charges from the charge conversion unit PD to the charge storage unit FD as operation voltage is applied thereto, a reset switching unit RX for draining the charges of at least one of the charge conversion unit PD and the charge storage unit FD as operation voltage is applied thereto, and an output unit for outputting the charges stored in at least one of the charge conversion unit PD and the charge storage unit FD. The output unit may include at least one of a drive switching unit DX, a select switching unit SX and an output voltage terminal Vout shown in FIG. 1.

The switching units TX, RX, DX and SX shown in FIG. 1 may be prepared as CMOS transistors, and the charge storage unit may be prepared as floating diffusion region such as a capacitor. In addition, the pixel array 100 may further include a power supply VDD. If a plurality of pixel circuits are present, each pixel circuit may share the power supply VDD.

The charge conversion unit PD collects the light and converts the light into charges to integrate the charges, and may be prepared as a photodiode. The charges integrated in the charge conversion unit PD are transferred to the charge storage unit FD through the transfer switching unit TX as operation voltage of the transfer switching unit TX is applied.

Meanwhile, the charge conversion unit PD independently integrates the charges during various integration sections, for instance, during first and second integration sections.

In addition, when reading out the signal of charge integrated during the second integration section, the charge conversion unit PD is connected to the charge storage unit FD through the transfer switching unit TX, so that the detection range of the light having the high intensity of illumination can be widened. Thus, the detection range of the light having the high intensity of illumination can be widened depending on the charge storage capability of the charge conversion unit PD. For instance, if the charge storage capability of the charge conversion unit PD is 1 and the charge storage capability of the charge storage unit FD is 1, the photo-charges having the high intensity of illumination can be stored based on the total charge storage capability of the charge conversion unit PD and the charge storage unit FD when reading out the signal during the second integration section. That is, the dynamic range may be expanded according to the proportion between the charge storage capability of the charge conversion unit PD and the charge storage capability of the charge storage unit FD.

The first integration section is for detecting the light having the middle intensity of illumination and the low intensity of illumination. Different from the second integration section, the overflow of the charges in the charge conversion unit PD is not important during the first integration section. Under the high intensity of illumination, the overflow of the charges may occur in the charge conversion unit PD. In this case, the light intensity may be determined based on the quantity of charges detected during the second integration section.

Meanwhile, under the middle and low intensity of illumination, the overflow of the charges may not occur in the charge conversion unit PD. In this case, the light intensity may be determined based on the quantity of charges detected during the first integration section. This is because the charges are rarely generated or the quantity of the charges is small during the first integration section under the middle and low intensity of illumination.

In addition, the second integration section is for detecting the light having the high intensity of illumination and is shorter than the first integration section. The length of the second integration section is set in such a manner that the overflow of charges, that is, the blooming phenomenon may not occur during the second integration section even if the light having the highest intensity of illumination is incident. The second integration section is set depending on the charge storage capability of the charge conversion unit PD and the charge storage unit FD, that is, the capacitance of the charge conversion unit PD and the charge storage unit FD, which will be described later.

The transfer switching unit TX can transfer charges of the charge conversion unit PD to the charge storage unit FD according to the operation voltage applied thereto. The transfer switching unit TX may operate at the start point or the end point of the first integration section. In addition, the transfer switching unit TX may transfer the charges to the charge storage unit FD at the start point or the end point of the second integration section.

Meanwhile, when the transfer switching unit TX transfers the charges to the charge storage unit FD during the second integration section, the output unit simultaneously outputs the charges stored in the charge storage unit FD and the charge conversion unit PD. In this regard, the operation timing of the transfer switching unit TX in the second integration section may be slightly longer than the operation timing of the transfer switching unit TX in the first integration section.

In addition, the transfer switching unit TX transfers the charges from the charge conversion unit PD to the charge storage unit FD at the start point of the first integration section or thereafter. Further, the transfer switching unit TX may transfer the charges from the charge conversion unit PD to the charge storage unit FD at the start point of the second integration section or thereafter. The transfer switching unit TX transfers the charges from the charge conversion unit PD to the charge storage unit FD as the operation voltage is applied thereto. At this time, the transfer switching unit TX can store some of the charges in a transistor gate thereof.

The charge storage unit FD may be prepared in the form of a capacitor having one end connected to the transfer switching unit TX and the other end connected to a grounding terminal. In addition, the charges stored in the charge storage unit FD are drained by the reset switching unit RX, so that the charge storage unit FD is reset into the initial state.

The reset switching unit RX removes the photo-charges stored in the charge storage unit FD in response to the reset control signal applied to the gate.

Meanwhile, after the readout of the signal level during the first integration section and before the readout of the signal level during the second integration section, the reset switching unit RX drains the charges stored in the charge storage unit FD, so that the charges unnecessarily stored in the charge storage unit FD can be erased before the readout of the second signal level.

According to the embodiment, the reset switching unit RX can drain the charges stored in the charge storage unit FD before the signal level of the charges integrated in the first integration section is readout.

The drive switching unit DX may transfer the charges stored in the charge storage unit FD to the output terminal Vout in response to the operation of the select switching unit. The drive switching unit DX operates as an amplifier such as a source follower.

Regarding the time point and the object for reading out the signal level, the output unit can readout the signal level of the charges stored in the charge storage unit FD after the first integration section, and can readout the signal level of the charges stored in the charge storage unit FD and the charge conversion unit PD while integrating the charges during the second integration section.

Meanwhile, although not shown in FIG. 1, the pixel array 100 according to the embodiment may further include a calculation unit for calculating the light intensity by using information about the quantity of charges, which are readout in the output terminal Vout. The calculation unit may include an integrated circuit for independently calculating the signal level of the charges integrated under the low, middle and high intensity of illumination based on the size of the first and second integration sections.

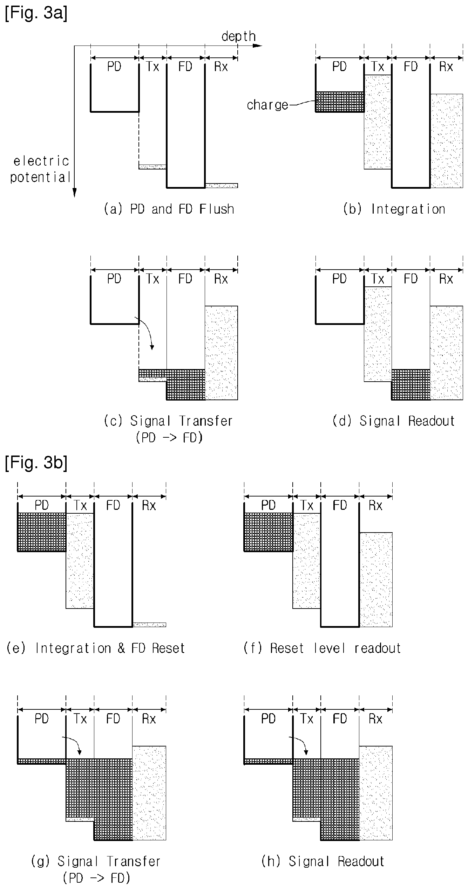

FIG. 2 is a view showing the driving timing of the pixel according to one example. The driving timing shown in FIG. 2 will be explained with reference to FIGS. 3a and 3b schematically showing the migration of charges.

In step (a), the reset switching unit RX and the transfer switching unit TX are turned on to drain and erase the charges of the charge storage unit FD and the charge conversion unit PD (PD and FD Flush).

In step (b), the charges are integrated in the first integration section (Integration). The integration of the charges in the first integration section may start from the point at which the reset switching unit RX and the transfer switching unit TX are simultaneously turned off.

In step (c), the transfer switching unit TX is operated at the start point and the end point of the first integration section to transfer the charges from the charge conversion unit PD to the charge storage unit FD (Signal Transfer from PD to FD).

In step (d), information about the quantity of charges stored during the first integration section is output and readout (Signal Readout).

In step (e), the reset switching unit RX is operated to drain the charges, which are integrated and stored in the charge storage unit FD during the first integration section, and the integration of charges in the charge conversion unit PD starts during the second integration section.

In step (f), the reset signal level is readout.

In step (g), the transfer switching unit TX is operated to transfer the charges integrated in the charge conversion unit PD during the second integration section to the charge storage unit FD. Referring to FIG. 3b (g), as the electric potential of the transfer switching unit TX becomes high, the charges of the charge conversion unit PD can be stored in the transfer switching unit TX. In detail, the charges integrated under the high intensity of illumination can be stored in the transfer switching unit TX and the charge conversion unit FD as well as the charge storage unit FD during the operation timing of the transfer switching unit TX, if there is great quantity of charges.

In step (h), the signal level of the charges integrated during the second integration section is readout. In this case, the signal level may be readout during the turn-on state of the transfer switching unit TX. That is, the charge conversion unit PD and the charge storage space of the transfer switching unit TX can be utilized as well as the charge storage unit FD in order to detect the light having the high intensity of illumination, so that the dynamic range can be more widened.

Meanwhile, the calculation unit can calculate the light intensity based on information about the quantity of charges, which are readout in steps (d) and (h). For instance, under the condition that the size of the second integration section is 1/10 based on the size of the first integration section, if the signal level detected during the second integration section is 0.1V and the information about the quantity of charges detected during the first integration section is 5V, the light intensity is µ(0.1 x 10 + 5), wherein µ is a pixel constant representing the light intensity (V/lux) based on the readout voltage value.

In detail, if the size of the second integration section with respect to the size of the first integration section is m, the information about the quantity of the charges readout during the first integration section is k1, and the information about the quantity of the charges readout during the second integration section is k2, the actual information about the quantity of the charges detected in the pixel is k1 x m + k2 and the light intensity is determined proportionally to the above value.

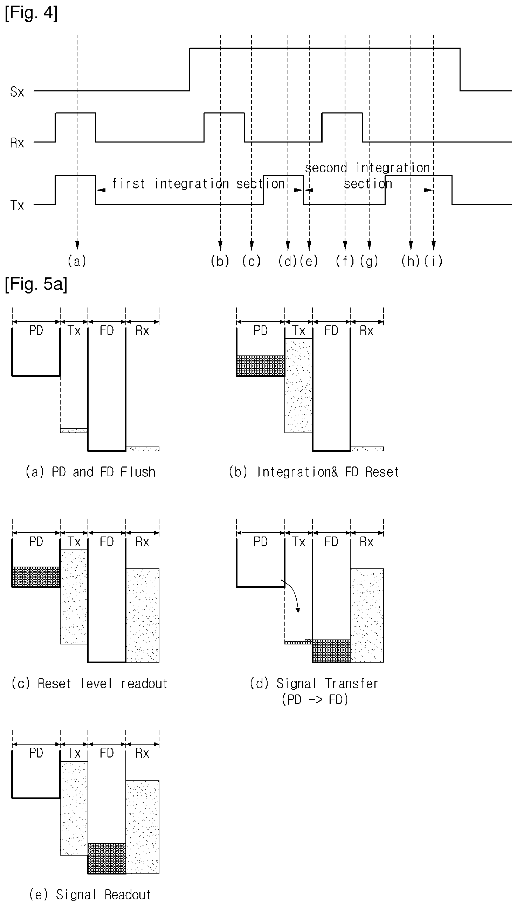

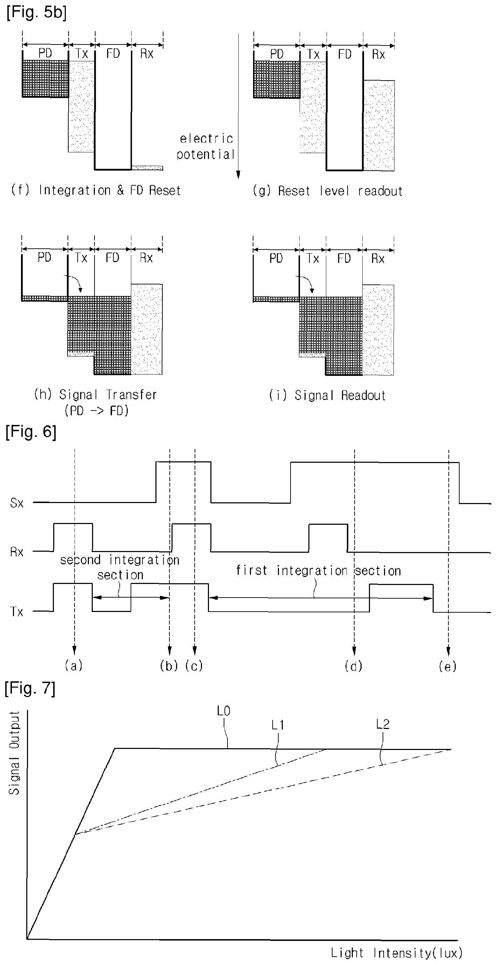

FIG. 4 is a view showing the driving timing of the pixel according to another example not forming part of the invention as claimed. The driving timing shown in FIG. 4 will be explained with reference to FIGS. 5a and 5b schematically showing the migration of charges. The driving timing shown in FIG. 4 is similar to the driving timing shown in FIG. 2 except for the step of reading out the reset signal level by operating the reset switching unit RX before reading out the signal level of the first integration section.

In step (a), the reset switching unit RX and the transfer switching unit TX are turned on to drain and erase the charges of the charge storage unit FD and the charge conversion unit PD (PD and FD Flush).

In step (b), the charges are integrated in the first integration section (Integration). The integration of the charges in the first integration section may start from the point at which the reset switching unit RX and the transfer switching unit TX are simultaneously turned off.

In step (b), the reset switching unit RX is operated when the charge integration starts in the first integration section, before the signal level is readout in the first integration section or before the operation timing of the transfer switching unit TX to drain the charges of the charge storage unit FD. Thus, the charges unnecessarily stored in the charge storage unit FD are erased before the signal level is readout in the first integration section, which is the section for the middle and low intensity of illumination, so that the signal can be accurately readout (Integration and FD Reset).

In step (c), the reset signal level is readout (Reset level readout).

In step (d), the transfer switching unit TX is operated at the start point and the end point of the first integration section to transfer the charges from the charge conversion unit PD to the charge storage unit FD (Signal Transfer from PD to FD).

In step (e), information about the quantity of charges stored during the first integration section is output and readout (Signal Readout).

In step (f), the reset switching unit RX is operated to drain the charges, which are integrated and stored in the charge storage unit FD during the first integration section, and the integration of charges in the charge conversion unit PD starts during the second integration section.

In step (g), the reset signal level is readout.

In step (h), the transfer switching unit TX is operated to transfer the charges integrated in the charge conversion unit PD during the second integration section to the charge storage unit FD. Similar to FIG. 3, Referring to FIG. 5b (h), as the electric potential of the transfer switching unit TX becomes high, the charges of the charge conversion unit PD can be stored in the transfer switching unit TX.

In step (i), the signal level of the charges integrated during the second integration section is readout. In this case, the signal level may be readout during the turn-on state of the transfer switching unit TX.

FIG. 6 is a view showing the driving timing of the pixel according to an embodiment. The driving timing shown in FIG. 6 is similar to the driving timing shown in FIGS. 2 and 4 except for the order of the first and second integration sections.

In step (a), the reset switching unit RX and the transfer switching unit TX are turned on to drain and erase the charges of the charge storage unit FD and the charge conversion unit PD.

Then, the charge integration in the second integration section, which is the section for the light having the high intensity of illumination, starts. The integration of the charges in the second integration section may start from the point at which the reset switching unit RX and the transfer switching unit TX are simultaneously turned off.

In step (b), the transfer switching unit TX is turned on to transfer the charges of the charge conversion unit PD to the charge storage unit FD. The signal level of the charges integrated in the second integration section is readout while the transfer switching unit TX is being turned on.

In step (c), after reading out the signal level in the second integration section, the reset switching unit RX is operated while the transfer switching unit TX is being turned on, thereby draining the charges of the charge storage unit FD.

Step (c) is performed to accurately readout the signal in the first integration section in order to detect the light having the middle and low intensity of illumination. Different from FIGS. 2 and 4, in which the first and second integration sections are sequentially arranged, if the second integration section is arranged prior to the first integration section, the charges integrated in the charge storage unit FD and the charge conversion unit PD due to the light having the high intensity of illumination must be clearly erased in order to accurately perform the charge integration in the first integration section.

The operation timing of the reset switching unit RX in step (c) may be included in the operation timing of the transfer switching unit TX. The operation timing of the reset switching unit RX may be set after the signal level is readout during the second integration section and before the signal level is readout in the first integration section.

Then, the charges are integrated during the first integration section.

In step (d), the reset switching unit RX is operated again while the charges are being integrated in the first integration section to drain the charges of the charge storage unit FD.

In step (e), the transfer switching unit TX is turned on and then turned off to readout the signal level in the first integration section.

As shown in FIG. 6, the order of the first and second integration sections may be interchangeable. In addition, the operation for reading out the signal level in the second integration section for the light having the high intensity of illumination can be performed simultaneously with the operation timing of the transfer switching unit TX, so the light detection range for the light having the high intensity of illumination can be widened.

FIG. 7 is a graph showing a signal output as a function of the light intensity when the pixel according to one embodiment is driven. Referring to FIG. 7, L0 represents the graph showing the signal output as a function of the light intensity readout in a general 4T image sensor, and L1 represents the graph, in which a second integration section is additionally set to detect the light having the high intensity of illumination and the operation timing of the transfer switching unit is synchronized with the signal readout timing according to one embodiment. As shown in FIG. 7, according to one embodiment, the light detection range for the light having the high intensity of illumination is more widened. Meanwhile, if the charge storage capability of the charge conversion unit PD is improved, the light detection range can be more widened from L1 to L2. That is, the light detection range for the light having the high intensity of illumination may depend on the charge storage capability of the charge conversion unit PD as well as the charge storage capability of the charge storage unit FD.

In addition, if the charge storage capability of the charge conversion unit PD is 1 and the charge storage capability of the charge storage unit FD is 1, the photo-charges having the high intensity of illumination can be stored based on the total charge storage capability of the charge conversion unit PD and the charge storage unit FD when reading out the signal during the second integration section. In this case, the gradient of the signal output with respect to the light intensity under the high intensity of illumination is about 1/2 so that the light detection range under the high intensity of illumination can be more widened. That is, the dynamic range may be expanded according to the proportion between the charge storage capability of the charge conversion unit PD and the charge storage capability of the charge storage unit FD.

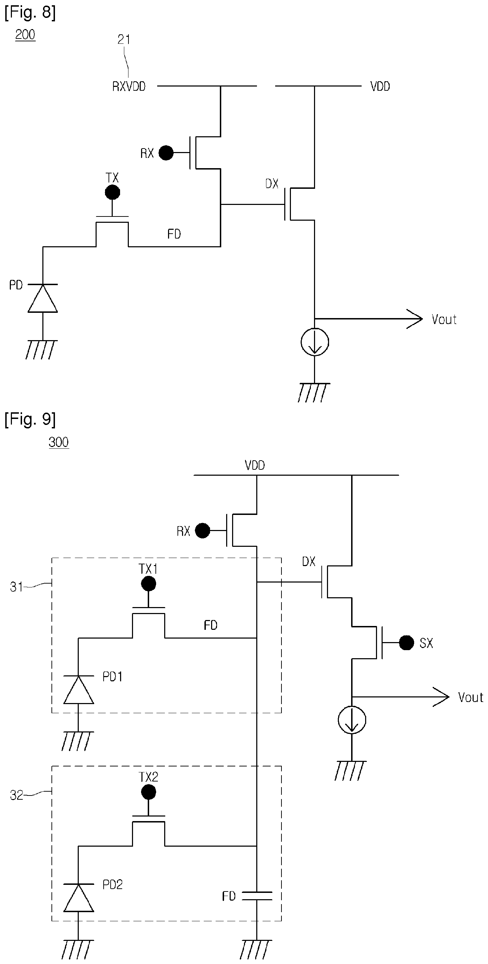

FIG. 8 is a circuit view of a pixel array according to another embodiment. Referring to FIG. 8, the pixel array 200 further includes a reset power supply RXVDD electrically connected to the reset switching unit RX, so that the power of the reset switching unit RX can be independently controlled. When the voltage is applied to the reset switching unit RX from the reset power supply RXVDD, the charges are drained. Thus, it is possible to readout the signal by selecting a specific pixel without using the select switching unit SX. That is, the select switching unit SX can be omitted so that the high fill factor can be obtained and the reset switching unit RX can be driven independently from other transistors.

FIG. 9 is a circuit view of a pixel array according to still another embodiment. Referring to FIG. 9, the pixel array 300 includes a circuit 31 having a charge conversion unit PD1 and a transfer switching unit TX1, and a circuit 32 having a charge conversion unit PD2 and a transfer switching unit TX2. The circuits 31 and 32 may share at least one of the charge storage unit FD, the reset switching unit RX and the output unit.

The circuits 31 and 32 may constitute unit pixels independent from each other.

In addition, the circuits 31 and 32 may detect the light having the low/middle intensity of illumination and the light having the high intensity of illumination, respectively. For instance, the charge conversion unit PD1 of the circuit 31 detects the light during the first integration section and the charge conversion unit PD2 of the circuit 32 detects the light during the second integration section. The signals may be output and readout in each timing of each integration section by operating the select switching unit SX.

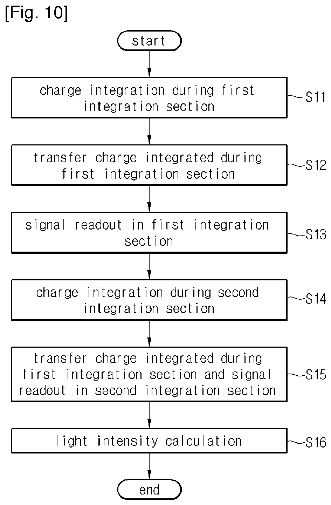

FIG. 10 is a flowchart showing a driving method for an image sensor according to an example. The flowchart shown in FIG. 10 is applicable for the operation timing shown in FIGS. 2 and 4. When comparing with the operation timing shown in FIG. 6, the order of the charge integration and signal level readout in the first and second integration sections may be changed.

In step S11, the charges are integrated during the first integration section. Before the charge integration, the reset switching unit and the transfer switching unit are turned on to erase the charges by draining the charges of the charge conversion unit and the charge storage unit. The charge integration during the first integration section may start from the point at which the reset switching unit and the transfer switching unit are turned off.

In step S12, the transfer switching unit is operated to transfer the charges integrated during the first integration section to the charge storage unit. The first integration section may finish at the point at which the transfer switching unit is turned on. Meanwhile, referring to the example shown in FIG. 4, the reset switching unit RX is operated before step S12 to drain the charges of the charge storage unit FD.

In step S13, the signal level of the charges integrated during the first integration section is readout.

Then, the charge integration is performed during the second integration section following the first integration section.

In step S14, the charges integrated during the second integration section are transferred. Before step S14, the charges may be integrated in the charge conversion unit during the second integration section. The second integration section is ranging from the point at which the charge transfer ends due to the turn-off of the transfer switching unit to the point at which the transfer switching unit is turned on again in step S12.

In addition, in step S15, as the transfer switching unit TX is turned on, the signal level of the charges, which are integrated during the second integration section and transferred to the charge storage unit, is readout.

In step S16, the total light intensity is calculated by using the signal level, which is readout in steps S13 and S15. In detail, the intensity of light having the high intensity of illumination integrated during the first integration section and the intensity of light having the middle/low intensity of illumination integrated during the second integration section are operated to calculate the total light intensity.

As described above, according to the WDR pixel, the pixel array, the image sensor including the same and the method for operating the image sensor of the embodiment, the conventional 4T image sensor is modified in such a manner that the driving timing is adjusted and the charge conversion unit serves as the charge storage region for the light having the high intensity of illumination, so the light having the middle/low intensity of illumination can be detected under the high intensity of illumination.

Any reference in this specification to one embodiment, an embodiment, example embodiment, etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image sensor including at least one pixel, wherein a first integration section is a charge integration section for a light having a middle intensity of illumination or a low intensity of illumination, and a second integration section is a charge integration section for a light having a high intensity of illumination, and wherein the first integration section is longer than the second integration section,
the method comprising:
draining and erasing charges of a charge conversion unit (PD) and a charge storage unit (FD);
starting charge integration of the second integration section in the charge conversion unit (PD);
transferring (a) charges integrated in the charge conversion unit (PD) during the second integration section to the charge storage unit (FD) by a transfer switching unit (TX);
reading out (b) a signal level of charge integrated during the second integration section at a same time of transferring (b) the charges;
draining (c) the charges of the charge storage unit (FD) after reading out the signal level in the second integration section, wherein a reset switching unit (RX) is operated while the transfer switching unit (TX) is turned on,
transferring charges integrated during the first integration section following the second integration section in the charge conversion unit to the charge storage unit (FD) by the transfer switching unit (TX), wherein the reset switching unit (RX) is operated again while the charges are integrated in the first integration section to drain (d) the charges of the charge storage unit (FD);
reading out (e) a signal level for charge integrated during the first integration section after the charges integrated in the charge conversion unit (PD) during the first integration section are transferred to the charge storage unit (FD); and
calculating a light intensity by using the signal levels of the first and second integration sections,
wherein the signal level of the second integration section is readout based on the quantity of charges stored in the charge conversion unit, the transfer switching unit (TX) and the charge storage unit (FD) of the image sensor, and
wherein the operation for reading out the signal level in the second integration section for the light having the high intensity of illumination is performed simultaneously with an operation timing of the transfer switching unit (TX).

2. The method of claim 1, wherein the operating timing of the transfer switching unit in the second integration section is slightly longer than the operation timing of the transfer switching unit in the first integration section.

3. The method of any one of claims 1 or 2, wherein the second integration section is established based on at least one of photo sensitivity and terminal capacitance of the charge conversion unit.

## Patentansprüche

1. Verfahren zum Betrieb eines Bildsensors mit mindestens einem Pixel, wobei ein erster Integrationsabschnitt ein Ladungsintegrationsabschnitt für ein Licht mit einer mittleren Beleuchtungsstärke oder einer niedrigen Beleuchtungsstärke ist und ein zweiter Integrationsabschnitt ein Ladungsintegrationsabschnitt für ein Licht mit einer hohen Beleuchtungsstärke ist, wobei der erste Integrationsabschnitt länger ist als der zweite Integrationsabschnitt, wobei das Verfahren Folgendes umfasst:
- Ablaufenlassen und Löschen von Ladungen einer Ladungsumwandlungseinheit (PD) und einer Ladungsspeichereinheit (FD);
- Starten der Ladungsintegration des zweiten Integrationsabschnitts in der Ladungsumwandlungseinheit (PD);
- Übertragen (a) von in die Ladungsumwandlungseinheit (PD) integrierten Ladungen während des zweiten Integrationsabschnitts an die Ladungsspeichereinheit (FD) mittels einer Übertragungsschalteinheit (TX);
- Auslesen (b) eines während des zweiten Integrationsabschnitts integrierten Ladungssignalpegels zum gleichen Zeitpunkt wie die Übertragung (b) der Ladungen;
- Ablaufenlassen (c) der Ladungen der Ladungsspeichereinheit (FD) nach dem Auslesen des Signalpegels während des zweiten Integrationsabschnitts, wobei eine Rückstellschalteinheit (RX) betätigt wird, während die Übertragungsschalteinheit (TX) eingeschaltet ist;
- Übertragen von Ladungen, die während des ersten Integrationsabschnitts nach dem zweiten Integrationsabschnitt in die Ladungsumwandlungseinheit integriert worden sind, an die Ladungsspeichereinheit (FD) mittels der Übertragungsschalteinheit (TX), wobei die Rückstellschalteinheit (RX) erneut betätigt wird, während die Ladungen in den ersten Integrationsabschnitt integriert werden, um die Ladungen der Ladungsspeichereinheit (FD) ablaufen zu lassen (d);
- Auslesen (e) eines Signalpegels für die während des ersten Integrationsabschnitts integrierte Ladung, nachdem die während des ersten Integrationsabschnitts in die Ladungsumwandlungseinheit (PD) integrierten Ladungen an die Ladungsspeichereinheit (FD) übertragen worden sind; und
- Berechnen einer Lichtstärke mithilfe der Signalpegel des ersten und des zweiten Integrationsabschnitts, wobei der Signalpegel des zweiten Integrationsabschnitts entsprechend der Anzahl der in der Ladungsumwandlungseinheit, der Übertragungsschalteinheit (TX) und der Ladungsspeichereinheit (FD) des Bildsensors gespeicherten Ladungen ausgelesen wird, wobei der Vorgang des Auslesens des Signalpegels im zweiten Integrationsabschnitt für das Licht mit der hohen Beleuchtungsstärke gleichzeitig mit einem Betriebszeitpunkt der Übertragungsschalteinheit (TX) ausgeführt wird.

2. Verfahren nach Anspruch 1, wobei die Betriebszeit der Übertragungsschalteinheit im zweiten Integrationsabschnitt geringfügig länger ist als die Betriebszeit der Übertragungsschalteinheit im ersten Integrationsabschnitt.

3. Verfahren nach Anspruch 1 oder 2, wobei der zweite Integrationsabschnitt mindestens auf der Basis der Lichtempfindlichkeit oder der Sperrschichtkapazität der Ladungsumwandlungseinheit festgelegt wird.

## Revendications

1. Procédé de commande de fonctionnement d'un capteur d'images comprenant au moins un pixel, dans lequel une première section d'intégration est une section d'intégration de charge pour une lampe dont l'éclairement est moyen ou faible, et une seconde section d'intégration est une section d'intégration de charge pour une lampe dont l'éclairement est élevé, et dans lequel la première section d'intégration est plus longue que la seconde section d'intégration.
le procédé comprenant :
la décharge et la suppression d'une unité de conversion de charge (PD) et d'une unité de stockage de charge (FD) ;
le lancement d'une intégration de charge d'une seconde section d'intégration dans l'unité de conversion de charge (PD) ;
le transfert (a) des charges intégrées dans l'unité de conversion de charge (PD) au cours de la seconde section d'intégration de charge vers l'unité de stockage de charge (FD) par une unité de commutation de transfert (TX) ;
la lecture (b) d'un niveau de signal intégré au cours de la seconde section d'intégration, simultanément au transfert (b) des charges ;
la décharge (c) des charges de l'unité de stockage de charge (FD) après lecture du niveau de signal dans la seconde section d'intégration, dans laquelle une unité de commutation de réinitialisation (RX) est commandée lorsque l'unité de commutation de transfert (TX) fonctionne ;
le transfert de charges intégrées au cours de la première section d'intégration suivant la seconde section d'intégration dans l'unité de conversion de charge vers l'unité de stockage de charge (FD) par l'unité de commutation de transfert (TX), dans lequel l'unité de commutation de réinitialisation (RX) est à nouveau commandée lorsque les charges sont intégrées dans la première section d'intégration pour décharger (d) les charges de l'unité de stockage de charge (FD) ;
la lecture (e) d'un niveau de signal pour la charge intégrée au cours de la première section d'intégration après que les charges intégrées dans l'unité de conversion de charge (PD) au cours de la première section d'intégration soient transférées vers l'unité de stockage de charge (FD) ; et
le calcul d'une intensité lumineuse en utilisant les niveaux de signal de la première et de la seconde sections d'intégration,
dans lequel le niveau de signal de la seconde section d'intégration est lu en fonction de la quantité de charges stockée dans l'unité de conversion de charge, l'unité de commutation de transfert (TX) et l'unité de stockage de charge (FD) du capteur d'image, et
dans lequel la lecture du niveau de signal dans la seconde section d'intégration de la lumière dont l'éclairement est élevé est réalisée simultanément à une phase de fonctionnement de l'unité de commutation de transfert (TX).

2. Procédé selon la revendication 1, dans lequel la phase de fonctionnement de l'unité de commutation de transfert dans la seconde section d'intégration est légèrement plus longue que la phase de fonctionnement de l'unité de commutation de transfert dans la première section d'intégration.

3. Procédé selon l'une quelconque des revendications 1 ou 2, dans lequel la seconde section d'intégration est établie sur au moins une photosensibilité et une capacité terminale de l'unité de conversion de charge.
